# EUROPEAN PATENT SPECIFICATION

(11) **EP 0 911 372 B1**
(45) Date of publication and mention of the grant of the patent: **26.02.2003**
(21) Application number: 98308751.1
(22) Date of filing: 27.10.1998
(51) Int. Cl.: C09D 11/00

(54) **Inkjet ink, method of marking eggshell with the same, and marked egg**
Tintenstrahltinte, Verfahren zur Markierung von Eierschalen und markierte Eier
Encre pour l'impression par jet d'encre, procédé d'impression de coquilles d'oeuf et oeuf marqué avec cette encre

(30) Priority: 27.10.1997 JP 29369597; 08.12.1997 JP 33669997
(43) Date of publication of application: 28.04.1999
(73) Proprietor: TOYO INK MANUFACTURING CO., LTD., Tokyo (JP); Toyo F.C.C. Co., Ltd., Itabashi-ku, Tokyo (JP)
(72) Inventor: Kohno, Monichiro, Itabashi-ku, Tokyo (JP); Isobe, Tetsuhiro, Itabashi-ku, Tokyo (JP); Iida, Yasuharu, Itabashi-ku, Tokyo (JP)
(74) Representative: Woods, Geoffrey Corlett

(56) References cited:
- EP-A- 0 761 782
- PATENT ABSTRACTS OF JAPAN vol. 009, no. 104 (C-279), 8 May 1985 & JP 59 230071 A (HITACHI SEISAKUSHO KK), 24 December 1984
- DATABASE WPI Section Ch, Week 7850 Derwent Publications Ltd., London, GB; Class E23, AN 78-90165A XP002090881 & JP 53 127010 A (HITACHI LTD) , 6 November 1978

## Description

### BACKGROUND OF THE INVENTION

### Field of the Invention

The present invention relates to an inkjet ink suitable for marking an eggshell surface, a method of marking an eggshell surface with the same, and a marked egg.

### Description of the Prior Art

In recent years, foods or food packages are required to carry a date of packing or preparation, an expiration date, etc., and under the circumstances, it is requested to mark a date of preparation, etc., on a generally inedible portion of a food, e.g., an egg shell surface. The showing of a date of preparation, etc., on eggshells is helpful for taking measures against microbial contamination in the stages of egg production, distributions and sales, and consumers in turn can take eggs safe.

Inkjet printers or thermal transfer printers have been and are used for recording a data of packing or a lot number on cans of canned foods and packages of packed foods. These printers can permit direct recordings of variable data and thus require no preparation of a printing plate, and computerized data can be easily changed. The above printers are therefore increasingly used in various ways in production sites.

Inkjet printers in particular are widely used since they permit fast printing and eject only a necessary ink so that necessary supplies can be decreased to be as small as possible. Further, they are suitable for marking eggshells since printing can be carried out in a noncontact state.

An ink for the above inkjet printers includes a solution prepared by dissolving a water-soluble dye which is a food additive dye in water. However, when the above ink is used, no sufficient print density can be obtained. Further, since the print is poor in water resistance, the ink cannot be used for foods which come into contact with water. Eggs in particular are boiled in water to prepare boiled eggs in some case, and in this case, the water-soluble ink is eluted from markings on eggshell surfaces during the boiling, to contaminate eggs and egg whites, which may result in the impairment of the commercial value of the eggs.

As an inkjet ink excellent in water resistance and suitable for printing on eggshell surfaces, JP-A-53-127010 discloses a green ink composition containing a Shellac as a binder, water and alcohol as solvents and sodium iron chlorophyllin or (and) sodium copper chlorophylin as colorant(s). However, the above composition has a problem that Shellac is deposited around nozzles of an inkjet printer to cause the clogging of the nozzles. For this reason, printing cannot be carried out stably in a continuous operation for a long period of time.

Further, as an inkjet ink excellent in water resistance, available is an ink prepared by dissolving an oil-soluble dye in a volatile solvent such as methyl ethyl ketone or ethanol, or an ink prepared by dissolving vinyl chloride, vinyl acetate, a xylene resin or butyral resin in the above ink. These inks are widely used as fast drying inks. These inks was durable to such an extent that they do not come off even when rubbed. Since, however, they are not composed of food additives, they cannot be used where they come in contact with foods.

### SUMMARY OF THE INVENTION

It is an object of the present invention to provide an inkjet ink which causes no clogging of nozzles of an inkjet printer when continuous printing is conducted for a long period of time, which elutes little coloring materials when markings on eggshells are wetted with water or marked eggs are cooked by boiling and which thus gives an appearance free from allowing people to have a distaste.

It is another object of the present invention to provide marked eggs which are free from allowing people to have a distaste to their appearance since eggs and egg whites are not contaminated by the elution of coloring materials when the eggs are wetted with water or cooked by boiling, and a method of marking an eggshell.

According to the present invention, the above object of the present invention is achieved by an inkjet ink comprising a chlorophyllin dyestuff, at least one viscosity adjuster selected from the group consisting of alkali metal salt of alginic acid, propylene glycol alginate ester, calcium carboxymethyl cellulose, sodium carboxymethyl cellulose, glycerin fatty acid ester, sucrose fatty acid ester, sorbitan fatty acid ester, sodium starch glycolate, sodium starch phosphate ester, sodium polyacrylate, propylene glycol fatty acid ester and methyl cellulose, and water.

According to the present invention, further, the above object of the present invention is achieved by the above inkjet ink which contains 0.1 to 5 % by weight of the chlorophyllin dyestuff, 0.05 to 5 parts by weight of the viscosity adjuster and 50 to 99.85 % by weight of water.

According to the present invention, further, the above object of the present invention is achieved by a method of marking an eggshell, which comprises marking an eggshell surface with the above inkjet ink by an inkjet method.

Further, according to the present invention, the above object of the present invention is achieved by a marked egg, of which the eggshell surface is marked with the above inkjet ink.

### DETAILED DESCRIPTION OF THE INVENTION

The present inventors have made diligent studies to achieve the above object and have found the following. When at least one viscosity adjuster selected from the group consisting of alkali metal salt of alginic acid, propylene glycol alginate ester, calcium carboxymethyl cellulose, sodium carboxymethyl cellulose, glycerin fatty acid ester, sucrose fatty acid ester, sorbitan fatty acid ester, sodium starch glycolate, sodium starch phosphate ester, sodium polyacrylate, propylene glycol fatty acid ester and methyl cellulose is added to an inkjet ink containing a chlorophyllin dyestuff, particularly preferably sodium iron chlorophyllin, sodium magnesium chlorophyllin and/or sodium copper chlorophyllin and water, there can be obtained an inkjet ink which can provide an eggshell surface with a marking which is excellent in water resistance and abrasion resistance and has a high print density, and which is excellent in the stability of ejection with an inkjet printer. On the basis of the above finding, the present invention has been completed.

A chlorophyllin dyestuff is a water-soluble dyestuff which exhibits strong affinity to an eggshell surface. The chlorophyllin dyestuff includes sodium magnesium chlorophyllin, sodium iron chlorophylin and sodium copper chloropylin. Chlorophyll or cupper chlorophyll is also used as a dyestuff. The inkjet ink containing the chlorophyllin dyestuff, provided by the present invention, can give a marking on an eggshell which marking is not eluted even when the egg is immersed in water or boiled in water and which is thus excellent in water resistance and abrasion resistance. Further, of the above chlorophyllin dyestuffs, sodium magnesium chlorophyll, sodium iron chlorophyllin and sodium copper chloropyllin have high fungicidal and antimicrobial activities, and therefore, the inkjet ink containing one or both of them has a characteristic feature in that no mold occurs in the ink and causes no clogging of a nozzle when an inkjet printer of a continuous type is continuously operated.

The content of the chlorophyllin dyestuff in the ink is preferably 0.1 to 5 % by weight. When the above content is less than 0.1 % by weight, a print is insufficient in density, and when an inkjet printer of a continuous type is continuously operated, it is difficult to sufficiently prevent the occurrence of mold and nozzles are liable to be clogged. When the above content exceeds 5 % by weight, the ink tends to be poor in stability.

The viscosity adjuster is selected from alkali metal salt of alginic acid, propylene glycol alginate ester, calcium carboxymethyl cellulose, sodium carboxymethyl cellulose, glycerin fatty acid ester, sucrose fatty acid ester, sorbitan fatty acid ester, sodium starch glycolate, sodium starch phosphate ester, sodium polyacrylate, propylene glycol fatty acid ester and methyl cellulose. The viscosity adjuster works to increase the viscosity of the ink when dissolved in water. When the viscosity adjuster is used in combination with the chlorophylin dyestuff, marking in a high density can be attained.

Differing from water-soluble resins such as shellac, the above specific viscosity adjuster is not deposited around nozzles of an inkjet printer, and therefore, even when an inkjet printer of a continuous type is continuously operated, the nozzles are not clogged.

The content of the above specific viscosity adjuster in the ink is 0.05 to 5 % by weight, preferably 0.05 to 1 % by weight. When the above content is smaller than the lower limit of the above range, no proper viscosity is obtained so that a print is insufficient in density, and the surface of a marking is poor in smoothness. When the above content exceeds the upper limit of the above range, the ink is poor in the properties of ejection from nozzles since the viscosity of the ink is too high.

The water which is a medium for the ink of the present invention is selected from deionized water prepared by removing metal ions, etc., or distilled water. The content of the water in the ink is generally required to be at least 50 % by weight, and preferably, it is in the range of from 50 to 99.85 % by weight. The inkjet ink of the present invention may contain a lactic acid salt to be described later and also may optionally contain a water-soluble solvent selected from methanol, ethanol or propanol.

For preventing the drying of the ink in a nozzle, preferably, the inkjet ink of the present invention contains 0.5 to 10 % by weight of sodium lactate. Sodium lactate also works to adjust the electric conductivity of the ink when the ink is used with an inkjet printer of a continuous type. When the content of the sodium lactate is less than 0.5 % by weight, the ink is poor in moisture retention properties so that no sufficient electric conductivity can be obtained. When the above content exceeds 10 % by weight, the ink has extreme moisture retention properties, which results in poor drying of a marking surface.

For preventing the drying of the ink in a nozzle, preferably, the inkjet ink of the present invention contains 1 to 20 % by weight of propylene glycol and/or glycerin. When the content of the propylene glycol and/or glycerin is smaller than 1 % by weight, the effect on the prevention of the drying is insufficient, and the clogging of a nozzle is caused. When the above content exceeds 20 % by weight, the drying of a marking surface is slow, and detrimental influences such as the staining of a container, etc., are caused.

When the lactic acid salt and the propylene glycol and/or glycerin are added, the inkjet ink of the present invention preferably contains 0.1 to 5 % by weight of the chlorophylin dyestuff, 0.05 to 5 % by weight, preferably 0.05 to 1 % by weight, of the above specific viscosity adjuster, 0.5 to 10 % by weight of the sodium lactate, 1 to 20 % by weight of propylene glycol and/or glycerin and 50 to 98.35 % by weight of water.

The inkjet ink of the present invention can be prepared as follows. The chlorophyllin dyestuff, the above specific viscosity adjuster, water and other optional components such as sodium lactate, one or both of propylene glycol and glycerin and a pH buffer for maintaining the stable solubility of the dyestuff are mixed, the mixture is stirred and then the stirred mixture is filtered through a 0.2 to 3.0 µm pore size membrane filter. The above mixture can be stirred not only with a general stirrer having a blade but also with a high-speed dispersing machine or an emulsifier.

The inkjet ink of the present invention is generally adjusted to a viscosity in the range of from 1.3 to 20 cps at a temperature of 25°C. When the above viscosity is too low, the formation of ink dots on an eggshell is poor and a print has a low density. When the above viscosity is too high, there is caused a problem that the ejection is poor or that the drying properties are defective.

The inkjet ink of the present invention is generally adjusted to a surface tension in the range of from 30 to 50 mN/m although the surface tension differs depending upon printers to be used. Further, when marking is carried out with a printer of a continuous type, generally, the ink is adjusted to an electric conductivity in the range of from 0.3 to 10 mS/cm.

The marking on an eggshell is carried out by marking on an eggshell with the inkjet ink of the present invention according to an inkjet method. The inkjet method includes a continuous method (multi-valued deflection, binary deflection), and a drop on demand method (bubble jet method, piezo method, solenoid valve method). The continuous method is suitable for fast marking or marking on a curved surface such as an eggshell.

The nozzle diameter of an inkjet printer is generally 8 to 200 µm. The inkjet ink of the present invention contains no resins and therefore permits continuous marking for a long period of time without clogging a nozzle of a printer.

Further, when the inkjet ink of the present invention is used, the inkjet ink dyes an eggshell surface and strongly bonds thereto, and it gives a marked article from which almost no ink is eluted when the marked article is immersed in cold water or hot water.

The inkjet ink of the present invention is suitable for marking foods since it can be constituted of only food additives which can be used in foods.

### EXAMPLES

The present invention will be explained in detail with reference to Examples hereinafter. In Examples, "part" and "%" stand for "part by weight" and "% by weight", respectively.

### Example 1

The following materials were mixed and dissolved, and then the solution was filtered through a 0.8 µm membrane filter to obtain an inkjet ink.

| | |
|---|---|
| Sodium iron chlorophyllin | 1.50 parts |
| Sodium alginate | 0.14 part |
| Sodium lactate | 3.00 parts |
| Propylene glycol | 14.00 parts |
| Distilled water | 81.36 parts |

### Examples 2 - 8

Raw materials shown in Table 1 and distilled water were mixed and dissolved, and the solution was filtered through a 0.8 µm pore size membrane filter, to obtain an inkjet ink. The distilled water was added such that the total amount of the raw material and the distilled water was 100 parts.

**Table 1**

| Unit: part | | | | | | | | |
|---|---|---|---|---|---|---|---|---|
| | Example | 2 | 3 | 4 | 5 | 6 | 7 | 8 |
| Composition (part) | Sodium iron chlorophyllin | | 1.5 | 1.5 | | 1.5 | 1.5 | |
| | Sodium magnesium chlorophyllin | | | | | | | 3.50 |
| | Sodium copper chlorophyllin | 1.0 | | | 1.0 | | | |
| | Kaoliang dyestuff | | | 0.5 | | | | |
| | Sodium alginate | 0.14 | | 0.14 | 0.14 | | 0.14 | 0.10 |
| | Propylene glycol alginate ester | | 0.2 | | | 0.2 | | |
| | Propylene glycol | 14.0 | 15.0 | | | | | 5.0 |
| | Glycerin | | | 15.0 | | 15.0 | | |
| | Sodium lactate*1 | 3.0 | 3.0 | 3.0 | 3.0 | | | 1.0 |

| | | | | | | | | |
|---|---|---|---|---|---|---|---|---|
| Note: *1: 50 % aqueous solution | | | | | | | | |

### Comparative Example 1

The following materials were mixed and dissolved, and then the solution was filtered through a 0.8 µm membrane filter to obtain an inkjet ink.

| | |
|---|---|
| Edible Red No. 105 | 1.0 part |
| Sodium carboxymethyl cellulose | 0.1 part |
| Sodium lactate | 1.0 part |
| Propylene glycol | 5.0 parts |
| Distilled water | 92.9 parts |

### Comparative Example 2

An inkjet ink was prepared in the same manner as in Example 1 except that 0.14 part of the sodium alginate was replaced with 0.14 part of distilled water.

### Comparative Example 3

The following materials were mixed and dissolved, and then the solution was filtered through a 0.8 µm pore size membrane filter to obtain an inkjet ink.

| | |
|---|---|
| Sodium copper chlorophyllin | 1.5 parts |
| A solution of shellac resin in water/ethanol ("Drug BA-40E", solid content 40 %, supplied by Gifu Shellac Seizosyo) | 12.5 parts |
| Sodium lactate | 3.0 parts |
| Propylene glycol | 14.0 parts |
| Distilled water | 69.0 parts |

The inkjet inks obtained in the above Examples and Comparative Examples were measured for various property values. Table 2 shows the measurement results, and the measurements were carried out as follows.

Viscosity (Pa · S): Measured with a viscometer ("Digital Viscomate" supplied by Yamaichi)

Surface tension (mN/m): Measured with a surface tension meter ("Surfacetensiometer" supplied by Kyowa Interface).

Electric conductivity (mS/cm): Measured with an electric conductivity meter ("Conductivity meter" supplied by Horiba).

Evaluation of marking: An ink was charged into the ink tank of an inkjet printer of a continuous type and marked on an eggshell surface, and the marked egg was evaluated for the following items (i) to (iv). Further, the operation of marking was continued for 3 months to evaluate the ink for the clogging of a nozzle and the occurrence of mold in an ink circulating system. Further, the marking operation was continued for 3 hours to evaluate the ink for ejection stability (A: no discontinuation of ejection, X: Ejection discontinued).
(i) Print density: A marking was measured for a print density with a Macbeth densitometer.
(ii) Drying property: A marked surface was touched with fingers, and it was visually observed whether or not a dyestuff came off (A: No dyestuff came off, X: Dyestuff came off).
(iii) Elution of dyestuff in water: A marked egg was immersed in water, and it was visually observed whether or not a dyestuff was eluted.
(iv) Elution of dyestuff in boiling water: A marked egg was immersed in boiling water for 15 minutes, and it was visually observed whether or not a dyestuff was eluted.

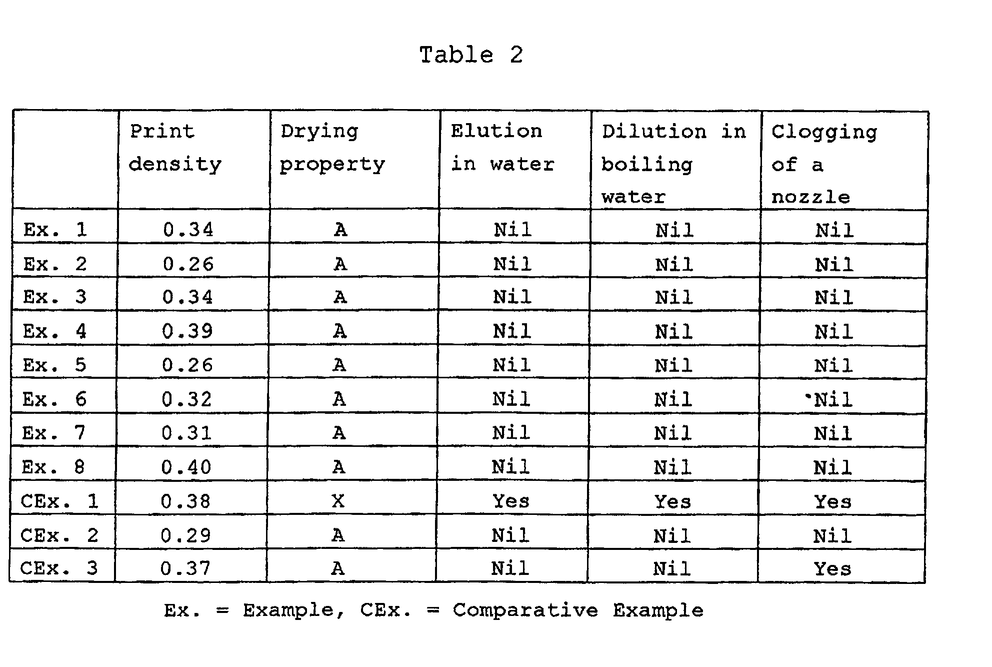

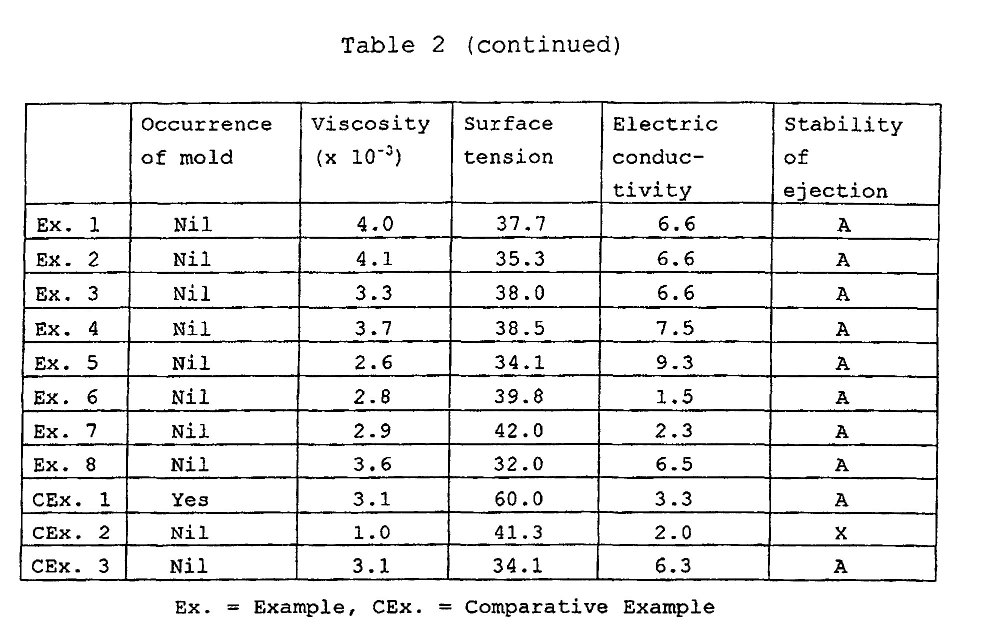

### Examples 9 - 17

Raw materials shown in Table 3 and distilled water were mixed and dissolved, and the solution was filtered through a 0.8 µm pore size membrane filter, to obtain an inkjet ink. The distilled water was added such that the total amount of the raw material and the distilled water was 100 parts. Table 4 shows the results.

**Table 3**

| Unit: part | | | | | | | | | | |
|---|---|---|---|---|---|---|---|---|---|---|
| | Example | 9 | 10 | 11 | 12 | 13 | 14 | 15 | 16 | 17 |
| Composition (part) | Sodium iron chlorophyllin | 1.5 | | 1.5 | 1.5 | | 1.5 | 1.5 | 1.5 | 1.5 |
| | Sodium copper chlorophyllin | | 1.0 | | | 1.0 | | | | |
| | Glycerin fatty acid E*1 | | | | 0.2 | | | | | |
| | Sucrose fatty acid E*2 | | 0.14 | | | | | | | |
| | Sorbitan fatty acid E*3 | | | 0.2 | | | | | | |
| | CMC-Ca*4 | | | | | 0.2 | | | | |
| | Starch glycolate-Na*5 | | | | | | 0.14 | | | |
| | Starch phosphate -Na*6 | | | | | | | 0.2 | | |
| | CMC-Na*7 | 0.14 | | | | | | | 0.2 | |
| | Methyl cellulose | | | | | | | | | 0.2 |
| | Propylene glycol | 14.0 | 14.0 | 15.0 | | 15.0 | | 14.0 | 13.0 | 14.0 |
| | Glycerin | | | | 15.0 | | 14.0 | | | |
| | Sodium lactate | 3.0 | 3.0 | 3.0 | 3.0 | 3.0 | 3.0 | 3.0 | 3.0 | 3.0 |
| | Purified water | Balance | | | | | | | | |

| | | | | | | | | | | |
|---|---|---|---|---|---|---|---|---|---|---|
| Notes: *1 Glycerin fatty acid ester | | | | | | | | | | |
| *2 Sucrose fatty acid ester | | | | | | | | | | |
| *3 Sorbitan fatty acid ester | | | | | | | | | | |
| *4 Calcium carboxymethyl cellulose | | | | | | | | | | |
| *5 Sodium starch glyolate | | | | | | | | | | |
| *6 Sodium starch phosphate ester | | | | | | | | | | |
| *7 Sodium carboxymethyl cellulose | | | | | | | | | | |

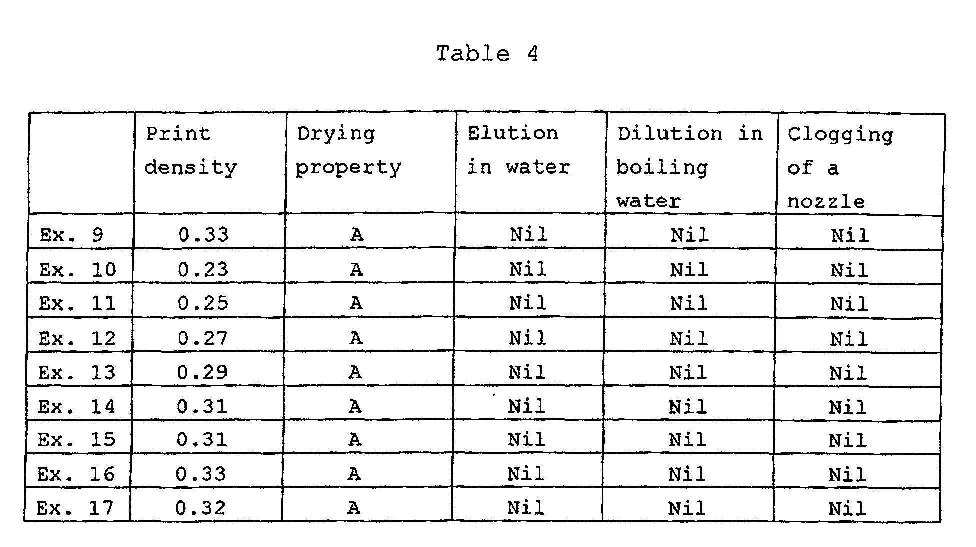

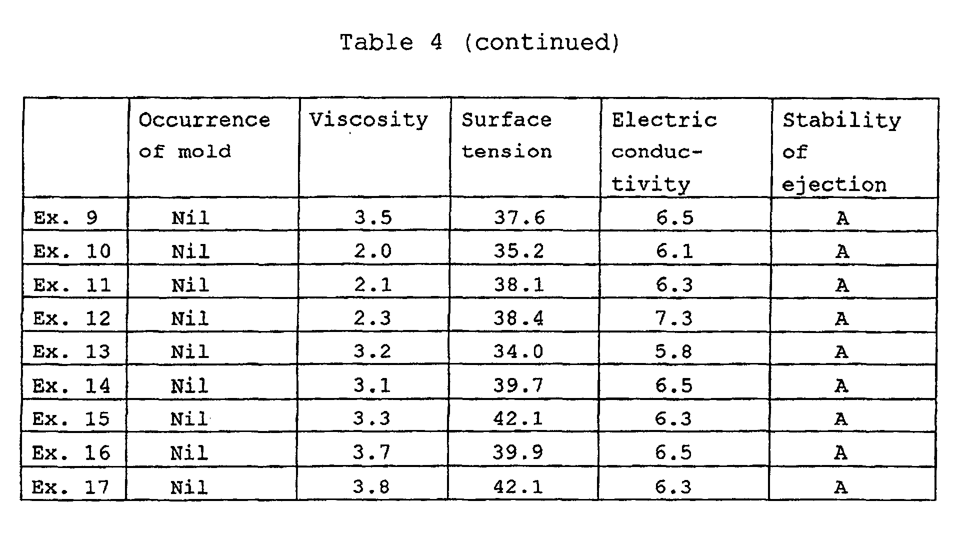

## Claims

1. An inkjet ink comprising:
(a) a chlorophyllin dyestuff;
(b) at least one viscosity adjuster selected from an alkali metal salt of alginic acid, propylene glycol alginate ester, calcium carboxymethyl cellulose, sodium carboxymethyl cellulose, glycerin fatty acid ester, sucrose fatty acid ester, sorbitan fatty acid ester, sodium starch glycolate, sodium starch phosphate ester, sodium polyacrylate, propylene glycol fatty acid ester and methyl cellulose; and
(c) water.

2. An inkjet ink according to claim 1, wherein the chlorophyllin dyestuff is sodium magnesium chlorophyllin, sodium iron chlorophyllin or sodium copper chlorophyllin.

3. An inkjet ink according to claim 1 or claim 2, wherein the viscosity adjuster is an alkali metal salt of alginic acid and/or propylene glycol alginate ester.

4. An inkjet ink according to any one of the preceding claims, wherein the inkjet ink further comprises sodium lactate.

5. An inkjet ink according to any one of the preceding claims, wherein the inkjet ink further comprises propylene glycol and/or glycerin.

6. An inkjet ink according to any one of the preceding claims, comprising 0.1 to 5% by weight of (a) 0.05 to 5% by weight of (b) and up to 99.85% by weight of (c) .

7. An inkjet ink according to any one of the preceding claims, comprising 0.1 to 5% by weight of (a), 0.05 to 5% by weight of (b), 1 to 20% by weight of propylene glycol and/or glycerin, 0 to 10% by weight of water-soluble solvent, and up to 98.35% by weight of (c).

8. A process for marking an eggshell, which comprises marking an eggshell surface with the inkjet ink according to any one of the preceding claims.

9. A marked egg, of which the eggshell surface is marked with the inkjet ink according to any one of claims 1 to 7.

10. The use of an inkjet ink according to any one of claims 1 to 7 to mark an eggshell surface.

## Patentansprüche

1. Tintenstrahldruckfarbe, umfassend:
(a) ein Chlorphyllin-Farbstoff;
(b) mindestens einen Viskositätseinsteller, gewählt aus einem Alkalimetallsalz von Alginsäure, Propylenglykolalginatester, Calciumcarboxymethylcellulose, Natriumcarboxymethylcellulose, Glycerinfettsäureester, Sucrosefettsäureester, Sorbitanfettsäureester, Natriumstärkeglykolat, Natriumstärkephosphatester, Natriumpolyacrylat, Propylenglykolfettsäureester und Methylcellulose; und
(c) Wasser.

2. Tintenstrahldruckfarbe gemäß Anspruch 1, wobei der Chlorphyllin-Farbstoff Natriummagnesiumchlorphyllin, Natriumeisenchlorphyllin oder Natriumkupferchlorphyllin ist.

3. Tintenstrahldruckfarbe gemäß Anspruch 1 oder Anspruch 2, wobei der Viskositätseinsteller ein Alkalimetallsalz von Alginsäure und/oder Propylenglykolalginatester ist.

4. Tintenstrahldruckfarbe gemäß mindestens einem der vorhergehenden Ansprüche, wobei die Tintenstrahldruckfarbe weiter Natriumlactat umfasst.

5. Tintenstrahldruckfarbe gemäß mindestens einem der vorhergehenden Ansprüche, wobei die Tintenstrahldruckfarbe weiter Propylenglykol und/oder Glycerin umfasst.

6. Tintenstrahldruckfarbe gemäß mindestens einem der vorhergehenden Ansprüche, umfassend 0,1 bis 5 Gew.-% (a), 0,05 bis 5 Gew.-% (b) und bis zu 99,85 Gew.-% (c).

7. Tintenstrahldruckfarbe gemäß mindestens einem der vorhergehenden Ansprüche, umfassend 0,1 bis 5 Gew.-% (a), 0,05 bis 5 Gew.-% (b), 1 bis 20 Gew.-% Propylenglykol und/oder Glycerin, 0 bis 10 Gew.-% wasserlösliches Lösungsmittel und bis zu 98,35 Gew.-% (c).

8. Verfahren zur Markierung einer Eierschale, umfassend das Markieren einer Eierschalenoberfläche mit einer Tintenstrahldruckfarbe gemäß mindestens einem der vorhergehenden Ansprüche.

9. Markiertes Ei, dessen Eierschalenoberfläche mit der Tintenstrahldruckfarbe gemäß mindestens einem der vorhergehenden Ansprüche 1 bis 7 markiert ist.

10. Verwendung einer Tintenstrahldruckfarbe gemäß mindestens einem der Ansprüche 1 bis 7 zur Markierung einer Eierschalenoberfläche.

## Revendications

1. Encre pour jet d'encre comprenant :
(a) un colorant de chlorophylline ;
(b) au moins un ajusteur de viscosité choisi parmi un sel alcalin d'acide alginique, ester d'alginate de propylèneglycol, carboxyméthylcellulose de calcium, carboxyméthylcellulose de sodium, ester d'acide gras de glycérine, ester d'acide gras de saccharose, ester d'acide gras de sorbitanne, glycolate d'amidon sodique, ester de phosphate d'amidon sodique, polyacrylate de sodium, ester d'acide gras de propylèneglycol et méthylcellulose ; et
(c) de l'eau.

2. Encre pour jet d'encre selon la revendication 1, dans laquelle le colorant de chlorophylline est une chlorophylline de magnésium sodique, une chlorophylline de fer sodique, ou une chlorophylline de cuivre sodique.

3. Encre pour jet d'encre selon la revendication 1 ou la revendication 2, dans laquelle l'ajusteur de viscosité est un sel alcalin d'acide alginique et/ou un ester d'alginate de propylèneglycol.

4. Encre pour jet d'encre selon l'une quelconque des revendications précédentes, dans laquelle l'encre pour jet d'encre comprend en outre du lactate de sodium.

5. Encre pour jet d'encre selon l'une quelconque des revendications précédentes, dans laquelle l'encre pour jet d'encre comprend en outre du propylèneglycol et/ou de la glycérine.

6. Encre pour jet d'encre selon l'une quelconque des revendications précédentes, comprenant 0,1 à 5% en poids de (a) 0,05% à 5% en poids de (b) et jusqu'à 99,85% en poids de (c).

7. Encre pour jet d'encre selon l'une quelconque des revendications précédentes, comprenant 0,1 à 5% en poids de (a), 0,05 à 5% en poids de (b), 1 à 20% en poids de propylèneglycol et/ou de glycérine, 0 à 10% en poids de solvant soluble dans l'eau, et jusqu'à 98,35% en poids de (c).

8. Procédé pour marquer une coquille d'oeuf, qui comprend le marquage d'une surface de coquille d'oeuf avec une encre pour jet d'encre selon l'une quelconque des revendications précédentes.

9. Oeuf marqué, dont la surface de coquille d'oeuf est marquée avec une encre pour jet d'encre selon l'une quelconque des revendications 1 à 7.

10. Utilisation d'une encre pour jet d'encre selon l'une quelconque des revendications 1 à 7 pour marquer une surface de coquille d'oeuf.
